# EUROPEAN PATENT APPLICATION

(11) **EP 2 827 658 A1**
(43) Date of publication of application: **21.01.2015**
(21) Application number: 14002355.7
(22) Date of filing: 09.07.2014
(51) Int. Cl.: H04W 52/02

(54) **Flexible downlink subframe structure for energy-efficient transmission**

(30) Priority: 16.07.2013 US 201313943302
(71) Applicant: Telefonaktiebolaget L M Ericsson (Publ), 164 83 Stockholm (SE)
(72) Inventor: Lightstone, Leo, Ottawa, K2G 0T6 (CA); Skärby, Christian, SE-113 51 Stockholm (SE); Heiser, Franz, SE-175 66 Järfälla (SE)
(74) Representative: Röthinger, Rainer

(57) **Abstract**

Disclosed herein are methods for using new energy-saving subframe structures, as well as corresponding apparatus that are configured to exploit these energy-saving subframes. In these energy-saving subframes, some, but not all, of the individual OFDM symbols in a subframe are inactive, meaning that no signal is transmitted during at least a part of the symbol time of the blanked symbols. An example method according to these techniques may be implemented in a radio transceiver, such as an LTE eNodeB, and comprises transmitting, in a first symbol time of a downlink subframe that comprises a plurality of symbol times, a codeword indicating that the downlink subframe includes at least one inactive symbol time. The method further includes transmitting data during at least one but fewer than all of the remaining ones of the plurality of symbol times in the downlink subframe. Corresponding techniques for receiving the energy-saving subframes are also disclosed.

## Description

### TECHNICAL FIELD

The present disclosure is generally related to wireless communications and is more particularly related to the adaptation of transmission frame structures for energy savings in wireless communications networks.

### BACKGROUND

Energy efficiency of wireless network elements is becoming increasingly important in wireless communication. There are several reasons for this increased concern with energy consumption. The relative importance of any of these concerns can be expected to be region specific.

First, energy cost in many cases is a significant part of the overall operating expenditures for a network operator. Second, reduced energy consumption of network components may allow for the possibility of new deployment scenarios. For example, reduced energy consumption may allow for the deployment of solar-powered base stations, with reasonably sized solar panels, in areas that have no convenient access to the electrical grid. This deployment opportunity may be of particular interest for the further spread of mobile-broadband services in rural areas, especially in the developing world.

In addition, when access to the electrical grid is not an issue but robustness of that grid is not guaranteed, it is important that the power draw of the base stations be as small as possible so that, collectively, the base stations do not tax the grid too much. Furthermore, when there is a power failure, energy efficiency at the base station will maximize the base station operating time on power backup.

The energy requirements for any base station vary considerably with time of day, day of week, geographic location, etc. In high-bandwidth networks like the Long-Term Evolution (LTE) wireless networks specified by the 3^{rd}-Generation Partnership Project (3GPP), many of the base stations ("evolved NodeB's", or "eNBs," in 3GPP terminology) will experience relatively low numbers of connected users and low capacity demands over significant portions of their service lives. Better solutions for tailoring the energy consumption of the base stations to their time-dependent capacity demands are needed.

### SUMMARY

When transmitting a small amount of information in a subframe, the energy consumption required to transmit the subframe can be reduced by reducing the number of Orthogonal Frequency Division Multiplexing (OFDM) symbols within the subframe that are active, in the sense that inactive OFDM symbols carry no control data or traffic data and thus require no transmitted signal at all. Detailed herein are new subframe structures that can be used to approach an ideal level of energy efficiency from a radio perspective. Specifically, the radio energy required to transmit the data from the eNB can be tailored to the required data volume in such a way as to improve energy efficiency at the radio, through the blanking of some, but not all, of the individual OFDM symbols in a subframe. For a radio transmitter design that can respond to the transitions between active and inactive OFDM symbols, the energy saving is roughly in proportion to the number of inactive symbols.

Embodiments of the present invention include methods for using the new subframe structures, as well as corresponding apparatus that are configured to exploit these energy-saving subframes. An example method according to these techniques may be implemented in a radio transceiver, such as an LTE eNodeB, and comprises transmitting, in a first symbol time of a downlink subframe that comprises a plurality of symbol times, a codeword indicating that the downlink subframe includes at least one inactive symbol time. The method further includes transmitting data during at least one but fewer than all of the remaining ones of the plurality of symbol times in the downlink subframe.

In some embodiments, no signal is transmitted during at least a portion of one or two symbol times immediately following the first symbol time. Data is transmitted during symbol times in the downlink subframe other than the first symbol time and the one or two symbol times immediately following the first symbol time. In other embodiments, user data is transmitted only during those symbol times of the downlink subframe that contain reference symbols, synchronization channels, or broadcast channels, while no signal is transmitted during at least a portion of each remaining symbol time.

In some embodiments, a broadcast message is transmitted, prior to the downlink subframe, the broadcast message indicating a subframe structure corresponding to the codeword. In other embodiments, the transmitted codeword is a selected one of a plurality of codewords indicating that the downlink subframe includes at least one inactive symbol time, each of the plurality of codewords defining a different subframe structure that includes one or more inactive symbol times. In any of these embodiments, the transmitting of data during at least one but fewer than all of the remaining ones of the plurality of symbol times in the downlink subframe is performed according to the indicated subframe structure.

Other embodiments of the disclosed techniques include methods for receiving energy-saving subframes transmitted according to any of the methods summarized above. In an example method, a radio transceiver receives, in a first symbol time of a downlink subframe that comprises a plurality of symbol times, a codeword indicating that the downlink subframe includes at least one inactive symbol time. The radio transceiver then receives data during at least one but fewer than all of the remaining ones of the plurality of symbol times. All of the variations summarized above for the transmitting of the energy-saving subframe are correspondingly applicable to the receiving of these subframes.

Still further embodiments include radio transceivers adapted to carry out one or more of the methods summarized above, or variants thereof. Of course, the techniques, systems, and apparatus described herein are not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 illustrates an example communications network in which the currently disclosed techniques may be implemented.
Figure 2 shows details of the LTE downlink subframe structure.
Figure 3 illustrates the control format indicator (CFI) codewords specified by the LTE standards.
Figure 4 is a process flow diagram illustrating an example method for transmitting energy-saving subframes.
Figure 5 is a process flow diagram illustrating an example method for receiving energy-saving subframes.
Figure 6 is a block diagram illustrating components of a radio transceiver according to some embodiments of the present invention.

### DETAILED DESCRIPTION

In the discussion that follows, specific details of particular embodiments of the present invention are set forth for purposes of explanation and not limitation. It will be appreciated by those skilled in the art that other embodiments may be employed that differ from these specific embodiments described herein with respect to certain non-essential specific details. Furthermore, in some instances detailed descriptions of well-known methods, nodes, interfaces, circuits, and devices are omitted so as not obscure the description with unnecessary detail.

Those skilled in the art will appreciate that the functions described may be implemented in one or in several nodes. Some or all of the functions described may be implemented using hardware circuitry, such as analog and/or discrete logic gates interconnected to perform a specialized function, Application-Specific Integrated Circuits (ASICs), Programmable Logic Arrays (PLAs), etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry.

Hardware implementations of the present invention may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions. Moreover, it should be appreciated that the inventive techniques may be embodied within any form of computer-readable memory, including non-transitory embodiments such as solid-state memory, magnetic disk, or optical disk containing an appropriate set of computer instructions that would cause a processor to carry out the techniques described herein.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

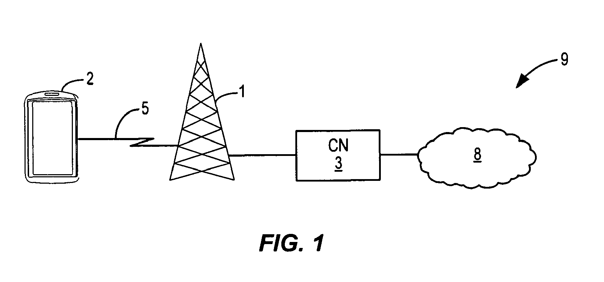

Figure 1 is a schematic diagram illustrating an environment where embodiments of the presently disclosed techniques can be applied. As seen in Figure 1, a mobile communications network 9 comprises a core network 3 and a radio access network comprising one or more radio base stations 1. The radio base stations 1 discussed in detail herein are in the form of evolved Node Bs also known as eNBs, e.g., as found in an LTE network, but the disclosed techniques may be more generally applicable to other types of base stations, base transceiver stations, etc. The radio base stations 1 provide radio connectivity to a plurality of wireless devices 2. The term wireless device is also known as user equipment (UE), mobile terminal, user terminal, user agent, etc.

Each of the radio base stations 1 provides radio coverage in one or more respective radio cells. Uplink (UL) communication, from the wireless device 2 to the radio base station 1, and downlink (DL) communication, from the radio base station 1 to the wireless device 2 occur over a wireless radio interface 5. The radio conditions of the wireless radio interface 5 vary over time and also depend on the position of the wireless device 2, due to effects such as interference, fading, multipath propagation, etc. The core network 3 provides access to central functions in the mobile communication network and connectivity to other communication networks 8.

The mobile communications network 9 may comply with specifications for LTE (Long Term Evolution), for example, or with specifications for another current or future wireless network. LTE will be used below to fully illustrate a context in which embodiments presented herein can be applied. Nevertheless, the disclosed techniques may be applied to other networks, as long as the principles described hereinafter are applicable.

As noted above, the energy requirements for any base station vary considerably with time of day, day of week, geographic location, etc. In high-bandwidth networks like LTE networks, many of the eNBs will experience relatively low numbers of connected users and low capacity demands over significant portions of their service lives. This means that the energy consumption of the eNBs may be tailored to their time-dependent loading.

Tailoring the energy consumption of an eNB to its time-dependent capacity demand impacts multiple aspects of the systems approach to energy efficiency. An important aspect involves managing the energy consumption of power amplifiers (PAs) in the radio transmit arm, which are a key component of all base station radios, whether those base stations are designed to cover so-called macrocells or picocells. The energy consumption of the power amplifiers currently available is far from proportional to the power-amplifier output power. The power amplifier consumes a non-negligible amount of energy even at low output power, for example when only limited control signaling is being transmitted within an otherwise "empty" cell.

Minimizing the transmission activity of such "always-on" signals is essential to effective power reduction in the base station, as this allows the base station to turn off transmission circuitry when there is no data to transmit. Progress in this area is underway in current discussion among members of 3GPP surrounding the development of Release 12 specifications for LTE networks. More specifically, a new carrier type is being considered for Release 12, with an eye towards energy efficient design.

A key aspect of the design that has already been discussed within 3GPP is the design of an operating mode in which the transmission of cell-specific reference signals is removed from four out of five sub frames. This allows for more selective transmission at the subframe level, in that entire subframes can be omitted. Network energy consumption can be further improved by enhancements to idle-mode support, as well as by improved mechanisms that more efficiently support longer silent periods - for example, for low-power nodes under the coverage of a macro layer.

Currently, however, there are no proposals for maximizing radio efficiency at the level of an individual subframe. At times of low demand, there is the potential for many non-full (hence energy-inefficient) subframes. Alternatively, if a scheduler at the eNB is designed to retain the low volumes of data until such time as a subframe can be filled, there is a penalty of increased latency. Examples of application types where data volume is small but latency requirements are critical include Voice Over IP (VoIP) and gaming. In a lightly loaded base station, the data for these applications must be transmitted at regular intervals, to meet latency requirements. This means, however, that many of the transmitted subframes are likely to carry only a small portion of data.

Without loss of generality, the discussion that follows draws examples from the subframe structure of a non-extended cell in LTE. The concepts apply equally well to extended cells, in which the cyclic prefix for each OFDM cell is extended to accommodate wider channel spreads, resulting in that each subframe includes only twelve OFDM symbols, rather than fourteen. Furthermore, since the focus is at the subframe level, the concepts apply to both Time-Division Duplexing (TDD) and Frequency-Division Duplexing (FDD) modes of operation in LTE. While the details presented here are for LTE, it will be appreciated that the inventive techniques are more broadly applicable, including to other systems that use an OFDM or time-symbol based structure.

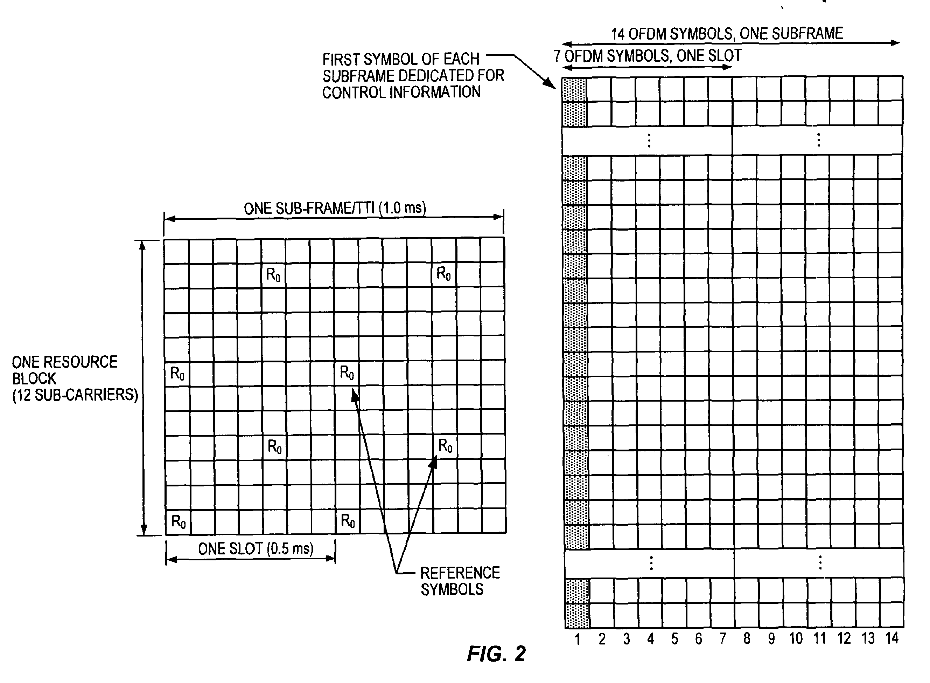

There are ten one-millisecond subframes in an LTE radio frame. Each downlink subframe consists of 14 OFDM symbols (in a non-extended cell). The first symbol always contains control channel information, while the last eleven symbols are used for shared channel and also may include periodic information for synchronization, and broadcast information. The second and third symbols are configured, on a subframe-by-subframe basis, to be used for either the physical downlink control channel (PDCCH) or physical downlink shared channel (PDSCH). Thus, in any given subframe, symbols 1 through n, where 1 ≤ n ≤ 3, may be used for control information. The remaining symbols (n+1) through 14 are used for the shared data channel and, optionally, demodulation reference symbols or extended PDCCH information. (For the small bandwidth of 1.4 MHz, the control channel will occupy symbols 1 and 2, and optionally 3, or 3 and 4). Pilot information is distributed in a regular pattern throughout the symbols. A representation of a typical downlink subframe structure is shown in Figure 2.

Included in the first symbol of every subframe is the physical downlink format indicator channel (PDFICH), which transports a CFI (control format indicator) value to communicate, to all receiving devices in the cell, the number of symbols used to contain the PDCCH. Once it has decoded the CFI for a particular subframe, the mobile terminal (a "user equipment," or "UE," in 3GPP terminology) knows how control data and shared data are mapped to the two-dimensional symbol space of the subframe.

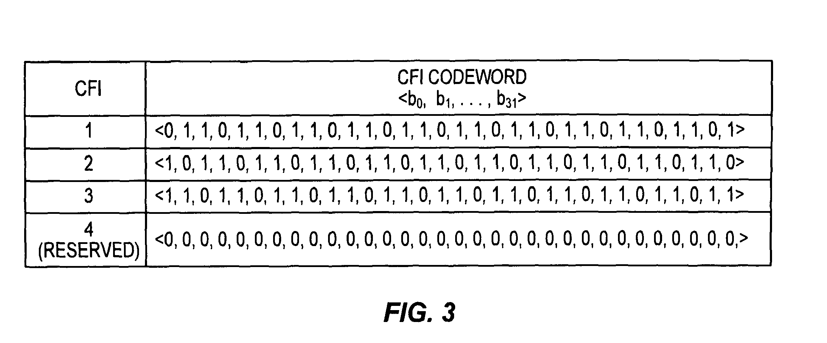

The 3GPP document 3GPP TS 36.212, v. 11.3.0 (June 2013), available at www.3gpp.org, specifies the encoding of the CFI. Currently, there are three supported 32-bit codewords, which are illustrated in Figure 3. These codewords, corresponding to CFI values 1 through 3, use the same bit pattern, but the pattern is circularly shifted one place to the right with each CFI increment. A fourth codeword, consisting entirely of zeros, is currently reserved and is also illustrated in Figure 3. Simple examination of the bit patterns for the four defined CFI codewords shows that the difference (as calculated by an "OR" and sum operation) between each value is large and nearly identical. As a result, all CFI values will have similar performance characteristics with respect to detection and decisions in a noisy environment. Although it is currently reserved (not used), the decode/detection performance of CFI=4 is no different from the other codewords.

The LTE standard allows the above "inhibiting" of data transmission on a per subframe basis. As discussed above, the energy-efficient modified radio frame structure approaches that have thus far been proposed within the standards bodies focus on eliminating or reducing the overhead information contained in subframes during times of low activity. But neither the existing LTE standard nor the planned modifications provide the flexibility to blank symbols within a subframe, even while the subframe in question is transporting data for individual users in other symbols.
For cellular radios covering macro- and pico- cells, a disproportionally large fraction of the power is consumed by the power amplifier (PA). Newly designed radios are capable of very rapid off/on PA transitions in time durations significantly smaller than an LTE symbol. Since so much energy is lost in simply powering the PA, it is much more energy efficient to, for example, transmit the full bandwidth on half of the symbols rather transmitting half the bandwidth on all of the symbols. This is true even though both configurations would allow (essentially) the same amount of information to be transmitted in the downlink. Thus, further energy savings can be realized by transmitting during fewer than all of the OFDM symbol times in a given subframe.

The techniques detailed below address the problem of radio energy efficiency when data must be transmitted over the air in a particular subframe but where there is not enough data to "fill" the subframe. A complementary view of this problem is to consider, given that a subframe containing overhead information must be transmitted over the air and that the transmit chain must therefore be activated in any event, the best means to include any user data that is available to be sent without incurring appreciable additional energy costs.

When transmitting a small amount of information in a subframe, it would be ideal (from a radio energy conservation perspective) if only a minimum number of the OFDM symbols within the subframe were active, in the sense that inactive OFDM symbols carry no control data or traffic data and thus require no transmitted signal at all. As detailed below, this disclosure describes a new subframe structure that can be used to approach this ideal level of energy efficiency from a radio perspective. Specifically, the radio energy required to transmit the data from the eNB can be tailored to the required data volume in such a way as to improve energy efficiency at the radio, through the blanking of some, but not all, of the individual OFDM symbols in a subframe. For a radio transmitter design that can respond to the transitions between active and inactive OFDM symbols, the energy saving is roughly in proportion to the number of symbols blanked out.

In LTE, the mapping of data to a downlink subframe can be non-contiguous in both time and frequency. This is illustrated by the frequency hopping schemes currently in place, for example, as well as by the current mapping of traffic data around reference, synchronization, and broadcast information in a subframe. So, while the blanking of individual subframes is technologically feasible, there is currently no LTE configuration to create blank symbols within a slot (i.e., a half-subframe), or to communicate the resulting modified structure of the subframe to the receiving UEs. Detailed below are several possible approaches to address these problems, which allow varying levels of flexibility in the subframe definition. The least flexible of these options has a minimal impact on the LTE standards definition, while the options with greater flexibility impose more significant changes to the LTE standard. According to some embodiments of the present techniques, the presence of an energy efficient subframe is indicated to the mobile terminal (a "UE," in 3GPP terminology) through the use of the codeword CFI=4. (See Figure 3.) As of the current LTE standards, this value of CFI has not been assigned any function, i.e., it is reserved. When CFI=4, the first OFDM symbol of the subframe contains all the control information, and the remaining channels are distributed according to one of the special energy efficient subframe options listed below. The restriction to using only one symbol for control channel limits the amount of control channel information to that can be sent. While it is possible to instead use two (or more) OFDM symbols for control information in a reduced-energy subframe according to the presently disclosed techniques, allocating only a single OFDM symbol for control information is reasonable in this context because the scenario of interest is a non-busy system, where few UE's will be scheduled in a subframe. Furthermore, for large bandwidths of 10, 15, and 20 MHz, where the present techniques are the most useful, one symbol for the Physical Downlink Control Channel (PDCCH) is often sufficient even in high utilization scenarios.

Following are several possible subframe configurations that contain at least one inactive symbol time. In each case, the PDCCH is only sent on the first symbol of the subframe, as is the codeword (CFI) that identifies the subframe as an energy-reduced subframe.

Blank Symbols 2 and 3 - In a first approach, the first OFDM symbol is used for control and the next two symbols are blank. The last 11 symbols of the subframe (or the last 9 symbols, in the event that an extended cyclic prefix is used) are used to carry user traffic, via the Physical Downlink Shared Channel (PDSCH). This approach maximizes compatibility with existing standards for LTE, as these standards already define how to map reference symbols and the PDSCH in the last 11 symbols of a subframe. This same mapping can be applied to energy-reduced subframes of this first type.

Blank Symbols That Carry No Overhead Information - In a second approach, only those symbols that contain overhead information are active, while the remaining symbols are blanked, i.e., inactive. Thus, the PDSCH is mapped to and transmitted on those symbols that carry the cell specific reference symbols (CRS), the synchronization channels, or the broadcast channel in the subframe in question, using the reference elements (REs) in those OFDM symbols that are not allocated to CRS, synchronization channels, or the broadcast channel. Compared to existing standards, this approach requires some new definitions for RE mappings to the subframe structure. However, this configuration takes advantage of the fact that some of the symbols in a subframe are active without regard to the amount of data carried by the subframe, and exploits these symbols for transmission of user data.

In the first approach described above (blanking the second and third symbols), two of the fourteen symbols are blanked, yielding a power saving of about 14.3%. As noted above, this approach imposes the smallest impact to LTE implementation, since all Release-8 and later solutions have already been designed with the capability to place PDSCH in only the last 11 symbols of the subframe. In the second approach, only those symbols that need to be "active" in order to carry overhead information are used. This could result in as few as four of the fourteen symbols being active, achieving a power savings of approximately 71%. Since the UE knows where the various control information is located in each subframe, there is no requirement to explicitly communicate which symbols in any given subframe are active.

Flexible Subframe - In a variant of the above approaches, one of several possible energy-saving subframe structures is selected by the eNB and communicated over a new SIB (system information block) message. In this case, the CFI=4 value in a subframe indicates that a special energy-saving subframe structure is used for the subframe, as above. However, the details of precisely which structure is used are separately communicated beforehand, over a new SIB message. This SIB message can indicate any one of several energy-saving subframe structures.

This flexible subframe approach provides maximum flexibility in exploiting a full range of subframe structures, which can be predefined to simplify the signaling. However, the use of SIB only achieves a semi-static specification of the subframe structure, owing to the long SIB repeat cycles (>80 milliseconds). In addition, it should be noted that the LTE specification supports relaxed UE requirements that allow the UE to not always read SIB, and to only read all contents if the broadcasted *systemInfoValueTag* parameter in the SIB Type 1 (SIB1) block has changed. This may further limit the speed with which changes can occur. As a result, this approach cannot change the details of the energy-saving subframe structure on a subframe-to-subframe basis, but can nevertheless allow a system to adapt to changing traffic conditions on a slightly slower basis.

This inability to change the specific structure of an energy-saving subframe on a subframe-to-subframe basis can be overcome with yet another variation of the present techniques. According to this variation, the CFI codeword set is expanded to include several new values. Each of these new values can then correspond to a different energy-efficient subframe structure, where the mapping of CFI codeword values to subframe structures may be specified by a standard or configured in a semi-static manner. This enhancement allows a dynamic configuration of subframes, so that the subframe structure can be tailored to energy efficiency needs on a persubframe basis.

According to this approach, then, the CFI codeword set is expanded to achieve maximum flexibility in defining the number of active symbols in the energy efficient subframe, and to allow the structure of the subframe to dynamically change subframe-to-subframe. Since each codeword is 32 bits longs, there are many options for expanding the set while still maintaining an appreciable decoding distance between each codeword. Of course, the decoding distance between codewords is necessarily reduced, compared to the use of only four of the 32-bit codewords.

Reduction of the inter-codeword spacing will result in reduced decoding performance in the presence of strong interference. However, there is a requirement in Releases 11 and 12 of the LTE specifications for UE's with improved receiver performance. This improved receiver sensitivity has been proposed in order to help UEs deal with uplink/downlink imbalances in pico/macro mixture heterogeneous environments. A possible secondary outcome of this improvement could be to allow expansion of the CFI codeword set while still meeting the required CFI decode performance.

In the context of LTE systems, the techniques described herein will require changes to the LTE standards. Thus, these techniques can be targeted to a new release of the standards, such as LTE Release 12. However, these techniques can be implemented in such a way as to maintain backward compatibility with earlier releases of the LTE standard. It should be noted that the techniques can be applied to both regular and extended cell subframe configurations, as well as to both FDD and TDD radio frame structures.

Assuming implementation of any of the techniques disclosed above in Release 12 of the LTE standard, it should be noted that only Release 12 (or later) UEs can be scheduled to receive data in an energy-saving subframe. This is because of the inability of a non-Release 12 UE to interpret information on this subframe. However, for Release 12 UEs, the subframe can be defined in several ways. In each case, the objective is to transmit on fewer than the maximum 13 symbols that are normally used for PDSCH in a subframe. The reduction in active symbols in a subframe will allow the radio to turn all or part of the power amplifier and/or other transmitter circuitry for several of the symbols, thereby saving energy at the eNodeB.

Since these techniques require changes to the LTE standard, it is useful to confirm that this change will be backward compatible for those UEs designed according to older releases of LTE. UEs perform some type of correlation against the expected set of CFI codewords in order to select the best candidate for the CFI value. According to the presently disclosed techniques, there will be no change to the meaning and use of CFI values 1, 2, and 3. When CFI=4 is transmitted, a non-Release 12 UE will perform the correlation against the three expected values and should (with the exception of bit errors) produce generally equal correlations for all CFI values 1 through 3, since the (unrecognized) CFI=4 value is equidistant from values 1 through 3. Since the transmitted value equals none of the three values known to the non-Release 12 UE, each of these correlations will be relatively poor, compared to the correlation values that would result if the corresponding value had actually been sent. The non-Release 12 UE will then use one of the CFI values (1 to 3), with more-or-less equal probability, or decide that the CFI could not be properly decoded and skip further processing in this subframe. However, the system can be configured to ensure that no data for non-Release 12 UEs are scheduled for an energy-saving subframe, so no matter which CFI the non-Release 12 UE assumes in response to receiving CFI=4, it will not find any downlink assignments or uplink grants. When system information that must be read by all UEs is transmitted, a value of CFI between 1 and 3 must be used.

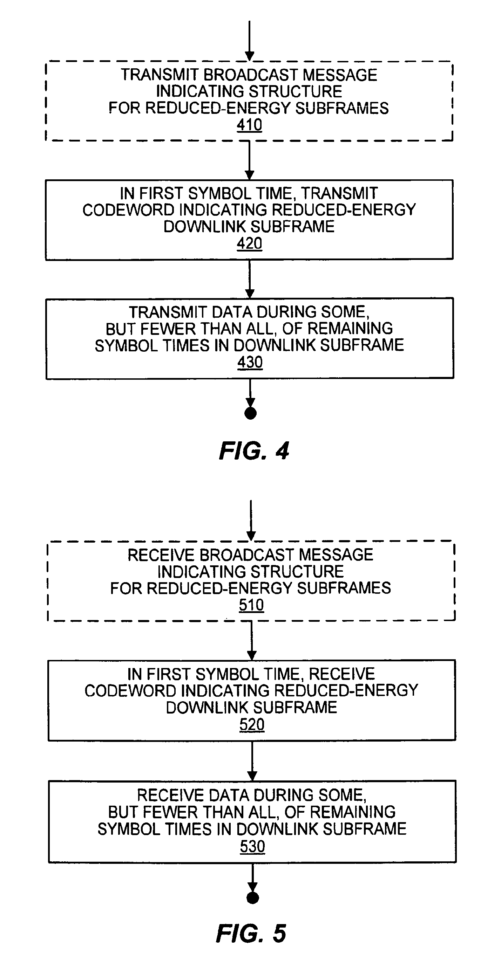

In the preceding discussion, the inventive techniques of the present disclosure have been described as applied to an LTE system. As noted earlier, these techniques may be more generally applicable, to other systems that can accommodate the blanking of one or more symbol times within a subframe. Figure 4 thus illustrates a generalized method for transmitting energy-saving subframes according to the present techniques, as implemented in a radio transceiver. This radio transceiver might be, but is not necessarily, part of an LTE eNodeB.

As seen at block 420, the illustrated method includes transmitting, in a first symbol time of a downlink subframe that comprises a plurality of symbol times, a codeword indicating that the downlink subframe includes at least one inactive symbol time. The method further includes transmitting data during at least one but fewer than all of the remaining ones of the plurality of symbol times in the downlink subframe, as shown at block 430. In some embodiments, transmitting data during at least one but fewer than all of the remaining ones of the plurality of symbol times comprises deactivating at least a portion of a transmitter circuit during the at least one inactive symbol time, thus reducing energy consumption by the radio transceiver.

In some embodiments, no signal is transmitted during at least a portion of one or two symbol times immediately following the first symbol time. (In practice, turning the transmitter on or off may require a transition time that falls within an inactive symbol. Of course, the transmitter signal is not modulated and thus carries no information during these transitions.) Data is transmitted during symbol times in the downlink subframe other than the first symbol time and the one or two symbol times immediately following the first symbol time. In other embodiments, user data is transmitted only during those symbol times of the downlink subframe that contain reference symbols, synchronization channels, or broadcast channels, while no signal is transmitted during at least a portion of each remaining symbol time. In some embodiments, a broadcast message is transmitted, prior to the downlink subframe, the broadcast message indicating a subframe structure corresponding to the codeword. This is shown at block 410 in Figure 4, but is illustrated with a dashed outline to indicate that this operation is "optional" in the sense that it does not appear in all embodiments or in every instance that the other illustrated operations are performed.

In other embodiments, the transmitted codeword is a selected one of a plurality of codewords indicating that the downlink subframe includes at least one inactive symbol time, each of the plurality of codewords defining a different subframe structure that includes one or more inactive symbol times. In any of these embodiments, the transmitting of data during at least one but fewer than all of the remaining ones of the plurality of symbol times in the downlink subframe is performed according to the indicated subframe structure.

The method illustrated in Figure 4 may not be compatible with all mobile terminals or other devices at the other end of the radio link from the radio transceiver transmitting the energy-saving subframes. Accordingly, in some embodiments, the method shown in Figure 4 is supplemented to maintain backwards compatibility. In these embodiments, the method further includes scheduling user data in the downlink subframe only for user devices that are known to the radio transceiver to be adapted to recognize the codeword indicating that the downlink subframe includes at least one inactive symbol time, while refraining from scheduling user data for user devices that are not known to be adapted to recognize the codeword.

Figure 5 illustrates a corresponding method for receiving energy-saving subframes, again as implemented in a radio transceiver. This radio transceiver might be, but is not necessarily, part of an LTE UE, for example. As shown at block 520, the radio transceiver receives, in a first symbol time of a downlink subframe that comprises a plurality of symbol times, a codeword indicating that the downlink subframe includes at least one inactive symbol time. The radio transceiver then receives data during at least one but fewer than all of the remaining ones of the plurality of symbol times, as shown at block 530. In some embodiments, receiving data during at least one but fewer than all of the remaining ones of the plurality of symbol times comprises deactivating at least a portion of a receiver circuit during the at least one inactive symbol time, thus reducing energy consumption by the radio transceiver.

All of the variations summarized above for the transmitting of the energy-saving subframe are correspondingly applicable to the receiving of these subframes. Thus, for example, in some embodiments no signal is received during at least a portion of one or two symbol times immediately following the first symbol time. Data is received during symbol times in the downlink subframe other than the first symbol time and the one or two symbol times immediately following the first symbol time. In other embodiments, user data is received only during those symbol times of the downlink subframe that contain reference symbols, synchronization channels, or broadcast channels, while no signal is received during at least a portion of each remaining symbol time.

In some embodiments, a broadcast message is received, prior to the downlink subframe, the broadcast message indicating a subframe structure corresponding to the codeword. This is shown at block 510 in Figure 5, but is illustrated with a dashed outline to indicate that this operation is "optional" in the sense that it does not appear in all embodiments or in every instance that the other illustrated operations are performed. In other embodiments, the received codeword is a selected one of a plurality of codewords indicating that the downlink subframe includes at least one inactive symbol time, each of the plurality of codewords defining a different subframe structure that includes one or more inactive symbol times. In any of these embodiments, the receiving of data during at least one but fewer than all of the remaining ones of the plurality of symbol times in the downlink subframe is performed according to the indicated subframe structure.

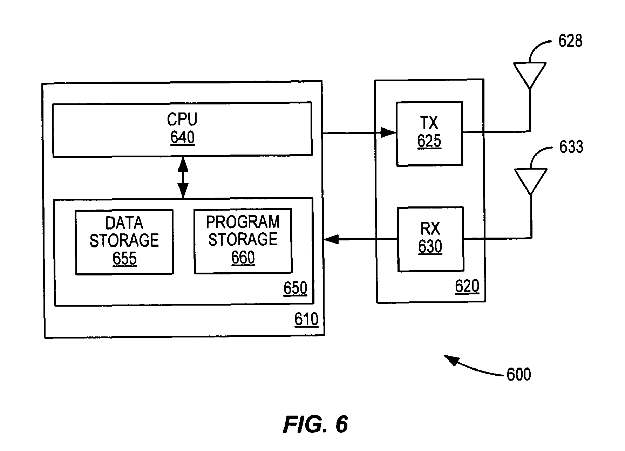

The techniques and methods described above may be implemented using radio circuitry and electronic data processing circuitry provided in a radio transceiver. Figure 6 illustrates features of an example radio transceiver 600 according to several embodiments of the present invention. Radio transceiver 600 may be part of a UE configured for operation with an LTE network (E-UTRAN), for example, or may be part of an LTE eNodeB. Although the detailed requirements for the components, subassemblies, etc., will differ depending on whether the radio transceiver 600 is part of a mobile terminal or a radio base station, the performance requirements for each are well known.

Whether forming part of a mobile terminal or a radio base station, radio transceiver 600 comprises a radio-frequency (RF) circuitry 620 configured to transmit radio signals to a remote node (e.g., a base station or one or more mobile terminals), as well as a processing circuit 610 for processing the signals transmitted and received by the RF circuitry 620. RF circuitry 620 includes a transmitter 625 coupled to one or more transmit antennas 628 and receiver 630 coupled to one or more receiver antennas 633. The same antenna(s) 628 and 633 may be used for both transmission and reception. Receiver 630 and transmitter 625 use known radio processing and signal processing components and techniques, typically according to a particular telecommunications standard such as the 3GPP standards for LTE. Note also that receiver 630 and transmitter 620 may each comprise separate radio and/or baseband circuitry for each of two or more different types of radio access network, such as radio/baseband circuitry adapted for E-UTRAN access and separate radio/baseband circuitry adapted for WiFI access. The same applies to the antennas - while in some cases one or more antennas may be used for accessing multiple types of networks, in other cases one or more antennas may be specifically adapted to a particular radio access network or networks. Because the various details and engineering tradeoffs associated with the design and implementation of such circuitry are well known and are unnecessary to a full understanding of the invention, additional details are not shown here.

Processing circuit 610 comprises one or more processors 640 coupled to one or more memory devices 650 that make up a data storage memory 655 and a program storage memory 660. Processor 640, identified as CPU 640 in Figure 6, may be a microprocessor, microcontroller, or digital signal processor, in some embodiments. More generally, processing circuit 610 may comprise a processor/firmware combination, or specialized digital hardware, or a combination thereof. Memory 650 may comprise one or several types of memory such as read-only memory (ROM), random-access memory, cache memory, flash memory devices, optical storage devices, etc. Because radio transceiver 600 may support multiple radio access networks, processing circuit 610 may include separate processing resources dedicated to one or several radio access technologies, in some embodiments. Again, because the various details and engineering tradeoffs associated with the design of baseband processing circuitry for mobile devices are well known and are unnecessary to a full understanding of the invention, additional details are not shown here.

Typical functions of the processing circuit 610 include modulation and coding of transmitted signals and the demodulation and decoding of received signals. In several embodiments of the present invention, processing circuit 610 is adapted, using suitable program code stored in program storage memory 660, for example, to carry out one of the techniques described above for receiving and/or transmitting energy-saving subframes, e.g., according to the techniques illustrated in Figures 4 and/or 5. Of course, it will be appreciated that not all of the steps of these techniques are necessarily performed in a single microprocessor or even in a single module.

Accordingly, in some embodiments the processing circuit 610 is configured to control the RF circuitry 620 to transmit, in a first symbol time of a downlink subframe that comprises a plurality of symbol times, a codeword indicating that the downlink subframe includes at least one inactive symbol time, and to transmit data during at least one but fewer than all of the remaining ones of the plurality of symbol times in the downlink subframe. In some embodiments, the processing circuit 610 is configured to control the RF circuitry 620 to deactivate at least a portion of a transmitter circuit during the at least one inactive symbol time.

Similarly, in other embodiments the processing circuit 1510 is configured to control the RF circuitry 620 to receive, in a first symbol time of a downlink subframe that comprises a plurality of symbol times, a codeword indicating that the downlink subframe includes at least one inactive symbol time, and to receive data during at least one but fewer than all of the remaining ones of the plurality of symbol times in the downlink subframe. In some embodiments, the processing circuit 610 is configured to control the RF circuitry 620 to deactivate at least a portion of a receiver circuit during the at least one inactive symbol time.

All of the variations described above, e.g., in connection with Figures 4 and 5, are applicable to the radio transceiver 600 illustrated in Figure 6.

The methods and apparatus described above can be used to achieve several advantages. In particular, during periods of low capacity demand the techniques can improve radio energy efficiency performance while maintaining good performance with respect to data latency. The techniques are applicable to all radio frame structures, including both normal and extended cell structures, and both TDD and FDD structures. Further, the techniques can be implemented in a manner that is backward compatible with earlier releases of the LTE standard.

With these and other variations and extensions in mind, those skilled in the art will appreciate that the foregoing description and the accompanying drawings represent non-limiting examples of the systems and apparatus taught herein for transmitting and receiving energy-saving subframes in a radio transceiver. As such, the present invention is not limited by the foregoing description and accompanying drawings. Instead, the present invention is limited only by the following claims and their legal equivalents.

## Claims

1. A method, in a radio transceiver, the method comprising:
transmitting (420), in a first symbol time of a downlink subframe that comprises a plurality of symbol times, a codeword indicating that the downlink subframe includes at least one inactive symbol time; and
transmitting (430) data during at least one but fewer than all of the remaining ones of the plurality of symbol times in the downlink subframe.

2. The method of claim 1, wherein transmitting data (430) during at least one but fewer than all of the remaining ones of the plurality of symbol times comprises deactivating at least a portion of a transmitter circuit during the at least one inactive symbol time.

3. The method of claim 1 or claim 2, wherein transmitting data (430) during at least one but fewer than all of the remaining ones of the plurality of symbol times comprises:
transmitting no signal during at least a portion of one or two symbol times immediately following the first symbol time, and transmitting data during symbol times in the downlink subframe other than the first symbol time and the one or two symbol times immediately following the first symbol time; and/or
transmitting user data only during those symbol times of the downlink subframe that contain reference symbols, synchronization channels, or broadcast channels, while transmitting no signal during at least a portion of each remaining symbol time.

4. The method of any of the preceding claims, further comprising transmitting (410) a broadcast message, prior to the downlink subframe, the broadcast message indicating a subframe structure corresponding to the codeword, wherein transmitting data during at least one but fewer than all of the remaining ones of the plurality of symbol times in the downlink subframe comprises transmitting data according to the indicated subframe structure.

5. The method of any of the preceding claims, wherein the transmitted codeword is a selected one of a plurality of codewords indicating that the downlink subframe includes at least one inactive symbol time, each of the plurality of codewords defining a different subframe structure that includes one or more inactive symbol times; and/or
wherein the transmitted data comprises user data scheduled for one or more user devices, the method further comprising scheduling user data in the downlink subframe only for user devices that are known to the radio transceiver to be adapted to recognize the codeword indicating that the downlink subframe includes at least one inactive symbol time, while refraining from scheduling user data for user devices that are not known to be adapted to recognize the codeword.

6. A method, in a radio transceiver, the method comprising:
receiving (520), in a first symbol time of a downlink subframe that comprises a plurality of symbol times, a codeword indicating that the downlink subframe includes at least one inactive symbol time; and
receiving (530) data during at least one but fewer than all of the remaining ones of the plurality of symbol times.

7. A radio transceiver (600), comprising
radio-frequency, RF, circuitry (620) configured to transmit radio signals to a remote node and to receive signals from the remote node, and
a processing circuit (610) configured to control the RF circuitry (620) to:
transmit, in a first symbol time of a downlink subframe that comprises a plurality of symbol times, a codeword indicating that the downlink subframe includes at least one inactive symbol time; and
transmit data during at least one but fewer than all of the remaining ones of the plurality of symbol times in the downlink subframe.

8. The radio transceiver (600) of claim 7, wherein the processing circuit (610) is configured to control the RF circuitry (620) to deactivate at least a portion of a transmitter circuit during the at least one inactive symbol time.

9. The radio transceiver of claim 7 or claim 8, wherein the processing circuit (610) is configured to control the RF circuitry (620):
to transmit no signal during at least a portion of one or two symbol times immediately following the first symbol time, and to transmit data during symbol times in the downlink subframe other than the first symbol time and the one or two symbol times immediately following the first symbol time; and/or
to transmit user data only during those symbol times of the downlink subframe that contain reference symbols, synchronization channels, or broadcast channels, while transmitting no signal during at least a portion of each remaining symbol time.

10. The radio transceiver (600) of any of claims 7 to 9, wherein the processing circuit (610) is further configured to control the RF circuitry (620) to transmit a broadcast message, prior to the downlink subframe, the broadcast message indicating a subframe structure corresponding to the codeword, and to control the RF circuitry (620) to transmit data in the downlink subframe according to the indicated subframe structure.

11. The radio transceiver (600) of any of claims 7 to 10, wherein the processing circuit (610) is configured to select, from a plurality of codewords, the codeword to be transmitted in the downlink subframe, each of the plurality of codewords defining a different subframe structure that includes one or more inactive symbol times; and/or wherein the processing circuit (610) is configured to schedule user data in the downlink subframe only for user devices that are known to the radio transceiver (600) to be adapted to recognize the codeword indicating that the downlink subframe includes at least one inactive symbol time, and to refrain from scheduling user data for user devices that are not known to be adapted to recognize the codeword.

12. A radio transceiver (600) comprising
radio-frequency, RF, circuitry (620) configured to transmit radio signals to a
remote node and to receive signals from the remote node, and
a processing circuit (610) configured to control the RF circuitry (620) to:
receive, in a first symbol time of a downlink subframe that comprises a plurality of symbol times, a codeword indicating that the downlink subframe includes at least one inactive symbol time; and
receive data during at least one but fewer than all of the remaining ones of the plurality of symbol times.

13. The radio transceiver (600) of claim 12, wherein the processing circuit (610) is configured to control the RF circuitry (620) to deactivate at least a portion of a receiver circuit during the at least one symbol time.

14. The radio transceiver of claim 12 or claim 13, wherein the processing circuit (610) is configured to control the RF circuitry (620):
to receive no signal during at least a portion of one or two symbol times immediately following the first symbol time, and to receive data during one or more symbol times in the downlink subframe other than the first symbol time and the one or two symbol times immediately following the first symbol time; and/or
to receive user data only during one or more of those symbol times of the downlink subframe that contain reference symbols, synchronization channels, or broadcast channels.

15. The radio transceiver (600) of any of claims 12 to 14, wherein the processing circuit (610) is configured to receive a broadcast message via the RF circuitry (620) prior to the downlink subframe, the broadcast message indicating a subframe structure corresponding to the codeword, and to control the RF circuitry (620) to receive data according to the indicated subframe structure; and/or wherein the received codeword is one of a plurality of codewords indicating that the downlink subframe includes at least one inactive symbol time, each of the plurality of codewords defining a different subframe structure that includes one or more inactive symbol times, wherein the processing circuit (610) is configured to control the RF circuitry (620) to receive the downlink subframe according to the subframe structure corresponding to the received codeword.
